(19) **Europäisches Patentamt**

**European Patent Office**

**Office européen des brevets**

(11) **EP 1 039 101 A2**

(12) **EUROPÄISCHE PATENTANMELDUNG**

(43) Veröffentlichungstag:
   **27.09.2000 Patentblatt 2000/39**

(51) Int Cl.⁷: **F01L 1/344**

(21) Anmeldenummer: **00890094.6**

(22) Anmeldetag: **23.03.2000**

| | |
|---|---|
| (84) Benannte Vertragsstaaten:<br>**AT BE CH CY DE DK ES FI FR GB GR IE IT LI LU MC NL PT SE**<br>Benannte Erstreckungsstaaten:<br>**AL LT LV MK RO SI** | (71) Anmelder: **TCG UNITECH Aktiengesellschaft**<br>**4560 Kirchdorf/Krems (AT)** |
| (30) Priorität: **23.03.1999 AT 54099**<br>**12.05.1999 AT 85499** | (72) Erfinder: **Heer, Siegfried**<br>**4560 Kirchdorf/Krems (AT)**<br><br>(74) Vertreter: **Babeluk, Michael, Dipl.-Ing. Mag.**<br>**Patentanwalt**<br>**Mariahilfer Gürtel 39/17**<br>**1150 Wien (AT)** |

(54) **Vorrichtung zur Verstellung einer Nockenwelle einer Brennkraftmaschine mit innerer Verbrennung**

(57) Die Erfindung betrifft eine Vorrichtung zur Verstellung einer Nockenwelle (1) einer Brennkraftmaschine mit innerer Verbrennung, mit einem Antriebsrad (3) zum Antrieb der Nockenwelle (1), das koaxial zur Nockenwelle (1) angeordnet ist, sowie mit einem Elektromotor (2), der mit der Nockenwelle (1) über ein Harmonic-Drive Getriebe in Verbindung steht, das aus einem Wälzlager (17) mit einem elliptischen Innenring (16), einem auf diesem Wälzlager (17) angeordneten flexiblen außenverzahnten Zahnrad (19) und einem starren innenverzahnten Zahnrad (22), das mit dem außenverzahnten Zahnrad (19) in Eingriff steht, zusammengesetzt ist. Ein einfacher und kompakter Aufbau wird dadurch erreicht, dass der Elektromotor (2) ein Gehäuse (2a) aufweist, das fest mit dem Antriebsrad (3) verbunden ist, und das zumindest teilweise in diesem angeordnet ist, und dass der Elektromotor (2) einen Rotor aufweist, der als Scheibenläufer (25) ausgebildet ist, der in einem Spalt zwischen zwei Gehäusehälften (2b, 2c) des Elektromotors (2) angeordnet ist.

Fig.1

**Beschreibung**

Die vorliegende Erfindung betrifft eine Vorrichtung zur Verstellung einer Nockenwelle einer Brennkraftmaschine mit innerer Verbrennung, mit einem Antriebsrad zum Antrieb der Nockenwelle, das koaxial zur Nockenwelle angeordnet ist, sowie mit einem Elektromotor, der mit der Nockenwelle über ein Harmonic-Drive Getriebe in Verbindung steht, das aus einem Wälzlager mit einem elliptischen Innenring, einem auf diesem Wälzlager angeordneten flexiblen außenverzahnten Zahnrad und einem starren innenverzahnten Zahnrad, das mit dem außenverzahnten Zahnrad in Eingriff steht, zusammengesetzt ist.

Um in verschiedenen Bereichen des Motorkennfeldes optimale Verbrauchs- und Abgaswerte zu erzielen, ist es erforderlich, die Ventilsteuerzeiten in Abhängigkeit verschiedener Betriebsparameter zu verändern. Eine solche Veränderung der Steuerzeiten kann in eleganter Weise durch eine Verdrehung der Nockenwelle in Bezug auf das sie antreibende Rad bewirkt werden. Die Nockenwelle einer Brennkraftmaschine wird üblicherweise durch ein Kettenrad, das mit der Kurbelwelle über eine Antriebskette verbunden ist, oder ein als Riemenscheibe ausgebildetes Antriebsrad, das über einen Zahnriemen mit der Kurbelwelle in Verbindung steht, angetrieben.

Die GB 2 221 513 A zeigt eine Verstellvorrichtung für Nockenwellen, bei der ein Elektromotor eine Gruppe von Hebeln betätigt, die die Nockenwelle gegenüber dem Antriebsrad verdrehen. Zu diesem Zweck wird ein Betätigungselement, an dem die Hebel angelenkt sind, in Axialrichtung verschoben. Eine solche Lösung ist jedoch aufwendig und aufgrund der Vielzahl von Lagern mit einem großen Spiel behaftet.

Aus der DE 41 10 088 C1 und aus der DE 39 29 619 A1 sind Verstelleinrichtungen bekannt, bei denen zwischen einem mit der Nockenwelle in Verbindung stehenden Bauteil und einem mit dem Antriebsrad in Verbindung stehenden Bauteil ein Verstellelement vorgesehen ist, das zwei Schrägverzahnungen aufweist, die mit entsprechenden Verzahnungen der Nockenwelle bzw. des Antriebsrades in Eingriff stehen. Durch eine Axialverschiebung dieses Verstellelements kann eine Verdrehung der Nockenwelle gegenüber dem Antriebsrad bewirkt werden. Eine Möglichkeit der Axialverschiebung des Verstellelements ist dabei die Betätigung durch einen Hydraulikkolben, der in Abhängigkeit von der erforderlichen Verstellung betätigt wird. Nachteilig bei dieser Lösung ist, dass zur Erzielung der erforderlichen Kräfte ein relativ großer Hydraulikkolben erforderlich ist, was einen großen baulichen Aufwand darstellt. Außerdem ist der Ölverbrauch durch die Betätigung des Kolbens relativ groß, was eine Belastung des Motors durch eine entsprechende Ölpumpe darstellt. Darüber hinaus kann bei einer solchen bekannten Vorrichtung die Nockenwelle nur zwischen zwei Endstellungen hin- und hergeschaltet werden.

Weiters ist aus der DE 4101676 A1 eine elektrische Verstellvorrichtung bekannt, bei der ein Elektromotor vorgesehen ist, der über eine Gewindespindel das Verstellelement verschiebt. Da sich jedoch das Verstellelement im wesentlichen mit Nockenwellendrehzahl dreht, muss zwischen dem Elektromotor und dem Verstellelement ein Axialdrucklager vorgesehen sein, das die Relativbewegung zwischen dem verdrehfesten und dem sich drehenden Bauteil aufnimmt. Dieses Axialdrucklager ist bei der bekannten Lösung praktisch während des gesamten Motorbetriebs belastet, da durch die zwischen Antriebsrad und Nockenwelle wirkenden Torsionsmomente stets eine in Axialrichtung wirkende Kraft auf das Verstellelement ausgeübt wird. Dieses Axialdrucklager ist daher ein kritischer Bauteil, der die Lebensdauer des Motors einschränkt. Eine ähnliche Lösung ist in der DE 33 20 835 A1 beschrieben, wobei die gleichen Nachteile auftreten.

Die DE 36 07 256 A beschreibt eine Vorrichtung, bei der ein Schrittmotor zur Verstellung der Nockenwelle vorgesehen ist, der einerseits mit der Nockenwelle und andererseits mit dem Antriebsrad verbunden ist. Da dieser Schrittmotor das gesamte Antriebsmoment der Nockenwelle aufnehmen muss, ist eine solche Lösung mit vernünftigem Aufwand nicht realisierbar.

Ferner zeigt die EP 0 596 860 A eine Vorrichtung zur Verstellung der Ventilöffnungszeiten, bei der die Nokkenwelle hohl ausgeführt ist, und eine Innenwelle enthält. Die Nocken sind zweiteilig ausgeführt, wobei die einzelnen Nockenabschnitte um einen bestimmten Winkel gegeneinander verdreht werden können.

Die Verdrehung der beiden Nockenabschnitte erfolgt durch einen sich mitdrehenden Elektromotor, der über Schleifringe versorgt wird.

Ebenso zeigt ein älterer Vorschlag der Anmelderin, der in der EP 0 903 471 A veröffentlicht ist, eine Nockenwellenverstelleinrichtung mit einem Planetengetriebe, bei der die Verstellung durch einen Elektromotor erfolgt, der über Schleifkontakte mit Strom versorgt wird.

Bei den meisten der oben beschriebenen Lösungen erfolgt die elektromotorische Verstellung über ein Getriebe mit einem großen Untersetzungsverhältnis, um das am Elektromotor anliegende Drehmoment in einem akzeptablen Bereich zu halten. Die Kraftübertragung über ein axial verschiebliches Element mit schraubenförmigen Verzahnungen besitzt den Vorteil, dass sehr große Untersetzungsverhältnisse relativ einfach darstellbar sind. Nachteilig bei diesen Lösungen ist jedoch, dass die Reibung relativ groß ist, und dass entsprechende Kräfte in Axialrichtung auftreten, die durch die Lager aufgenommen werden müssen. Andererseits ist die Kraftübertragung über ein Planetengetriebe relativ aufwendig, und es ist schwierig, große Untersetzungsverhältnisse zu erzielen.

Durch die Verwendung eines sogenannten Harmonic-Drive-Getriebes kann in einfacher Weise ein großes Untersetzungsverhältnis erreicht werden. Wenn beispielsweise die Zähnezahl des außenverzahnten Zahnrades um zwei geringer ist, als die Zähnezahl des innenverzahnten Zahnrades, die beispielsweise 50 beträgt, so wird ein Übersetzungsverhältnis von etwa 1:25 erreicht.

Bei der konkreten Ausführung einer Vorrichtung der oben beschriebenen Art sind jedoch über die bereits beschriebenen Fragen folgende Problemkreise konstruktiv zu bewältigen: Die Lagerung des Elektromotors soll in möglichst einfacher Weise gestaltet werden, so dass auf das Harmonic-Drive-Getriebe keine unzulässig großen Beanspruchungen wirken. Weiters darf die Lagerung des Elektromotors die erforderliche Abdichtung zwischen den ölführenden Abschnitten (Nockenwelle und Getriebe) und den nicht ölführenden Abschnitten nicht behindern. Weiters ist es erforderlich, die Lagerung des Antriebsrades in möglichst einfacher Weise zu realisieren. Besondere Rücksicht soll dabei auf den beschränkten Bauraum an der Stirnseite des Zylinderkopfs von Brennkraftmaschinen gelegt werden.

Eine weitere konstruktive Vorgabe besteht darin, einen Notlaufbetrieb des Motors bei ausgefallener Verstellvorrichtung zu gewährleisten und generell den Verstellbereich auf zulässige Winkel zu beschränken.

Aufgabe der vorliegenden Erfindung ist es, die eingangs beschriebene Vorrichtung in der Art weiterzubilden, dass die obigen Forderungen mit möglichst geringem Aufwand erreicht werden.

Erfindungsgemäß ist vorgesehen, dass der Elektromotor ein Gehäuse aufweist, das fest mit dem Antriebsrad verbunden ist, und das zumindest teilweise in diesem angeordnet ist, und dass der Elektromotor einen Rotor aufweist, der als Scheibenläufer ausgebildet ist, der in einem Spalt zwischen zwei Gehäusehälften des Elektromotors angeordnet ist.

Scheibenläufer sind Elektromotoren mit axialem Luftspalt, deren Läufer aus einem scheibenförmigen Grundkörper besteht, auf dem die Wicklungen in der form einer dünnen Schicht aufgebracht sind. In vielen Fällen sind die Wicklungen in der Form von Stanzkörpern auf einer Kunstharzscheibe aufgebracht. Die Scheibe kann aber auch aus Metall oder anderen Kunststoffen hergestellt sein. Im Fall von Gleichstrommotoren werden die Wicklungen durch Kohlebürsten angesteuert, die in Axialrichtung an die Scheibe angedrückt werden. Solche Scheibenläufer sind beispielsweise in der DE 31 07 834 A, der DE 32 34 274 A oder der DE 32 42 394 A beschrieben. Es kann ein solcher Scheibenläufer auch hergestellt werden, indem eine Kupferwicklung in eine Spritzgussform eingebracht wird, flachgepresst wird und mit Kunststoff ummantelt wird. Die Lauffläche für die Kohlebürsten kann hergestellt werden, indem dieser Bereich plangeschliffen wird, wobei die Kupferdrähte freigelegt werden.

Durch die erfindungsgemäße Ausbildung wird erreicht, dass die Verstellvorrichtung geringstmögliche axiale Abmessungen aufweist. Da der Rotor des Elektromotors als Scheibenläufer ausgebildet ist, kann durch einen vergleichsweise großen Durchmesser ein hohes Drehmoment erreicht werden. Eine besonders günstige konstruktive Lösung ergibt sich, wenn der Scheibenläufer innerhalb des Antriebsrades angeordnet ist. Dabei wird auch der Bauraum innerhalb des Antriebsrades für die Verstellvorrichtung ausgenützt.

Weiters kann vorgesehen sein, dass das Antriebsrad als Zahnriemenrad ausgebildet ist, das auf der Nockenwelle über Wälzlager gelagert ist. Günstig dabei ist, dass der Elektromotor selbst keine Lagerung benötigt, da er mit dem Antriebsrad integriert ausgeführt ist. Durch die Lagerung des Antriebsrades auf der Nockenwelle wird die Relativbewegung im Bereich des Harmonic-Drive-Getriebes minimiert, so dass eine unzulässige Belastung durch Schwingungen od. dgl. praktisch ausgeschlossen ist.

Für Motoren mit zwei Nockenwellen pro Zylinderreihe ist es besonders günstig, wenn das Zahnriemenrad zwei Laufflächen mit unterschiedlichen Außendurchmessern aufweist, wovon eine Lauffläche zur Aufnahme eines Zahnriemens ausgebildet ist, der von einer Kurbelwelle der Brennkraftmaschine angetrieben ist und die andere Lauffläche zur Aufnahme eines Zahnriemens ausgebildet ist, der zum Antrieb einer weiteren Nockenwelle vorgesehen ist. Auf diese Weise braucht nur eine Nockenwelle direkt von der Kurbelwelle angetrieben werden, was die Führung des entsprechenden Zahnriemens vereinfacht. Weiter ist auf diese Weise ein verringerter Abstand zwischen den beiden Nockenwellen möglich.

Eine besonders platzsparende konstruktive Lösung ist gegeben, wenn Schleifringe zur Versorgung des Elektromotors auf einer Stirnfläche des Antriebsrades ausgebildet sind.

Besonders bevorzugt ist es, wenn der Elektromotor eine Welle aufweist, die direkt mit dem elliptischen Innenring des Wälzlagers verbunden ist. Dabei ist es günstig, wenn flexible Zahnrad des Harmonic-Drive-Getriebes direkt mit der Nockenwelle verbunden ist. In diesem Fall ist das innenverzahnte Zahnrad des Harmonic-Drive-Getriebes mit dem Antriebsrad verbunden. Auf diese Weise ist ein besonders einfacher Aufbau der erfindungsgemäßen Lösung darstellbar.

Nachteilig ist bei herkömmlichen Harmonic-Drive-Getrieben, dass aufgrund der relativ feinen Verzahnung die Belastbarkeit beschränkt ist. Insbesondere sind solche Getriebe gegenüber stoßartigen Belastungen empfindlich. Um diesen Nachteil zu vermeiden, kann das Getriebe aus folgenden Bauteilen aufgebaut sein: einer ersten Eingriffsfläche, die am inneren Umfang eines ersten Eingriffsteils angeordnet ist, einer zweiten Eingriffsfläche, die am äußeren Umfang eines flexiblen Eingriffsteils angeordnet ist und mit der ersten Eingriffsfläche in Eingriff steht, und einem zum ersten Eingriffsteil und zum flexiblen Eingriffsteil koaxialen Treibteil, an dem ein Wälzlager mit einem unrund ausgebildeten Innenring angeordnet ist, das einen flexiblen Außenring aufweist, der mit dem flexiblen Eingriffsteil verbunden ist und diesen an vorzugsweise zwei Stellen gegen den ersten Eingriffsteil drückt, wobei die erste Eingriffsfläche des ersten Eingriffsteils mit der zweiten Eingriffsfläche des flexiblen Eingriffsteils in einer reibschlüssigen Verbindung steht.

Bei einem solchen Getriebe ist zwar die eindeutige phasenmäßige Zuordnung der einzelnen Komponenten und das genaue Übersetzungsverhältnis eines Zahnradgetriebes nicht mehr gegeben, aber es kann dafür eine Unempfindlichkeit gegen Überbelastung erreicht werden, die bei einem Zahnradgetriebe nicht gegeben ist. Weiters ist das erfindungsgemäße Getriebe unempfindlich gegenüber Schmutz und anspruchslos in bezug auf Schmierung.

Ein weiterer Vorteil der Erfindung besteht darin, dass die Exzentrizität des Wave Generators deutlich geringer ausgeführt werden kann als bei einem herkömmlichen Getriebe mit Verzahnungen. Dabei ist es nämlich erforderlich, die Exzentrizität so groß zu machen, dass die Zähne der ersten und der zweiten Eingriffsfläche außerhalb der Eingriffsbereiche nicht miteinander in Konflikt kommen. Bei der erfindungsgemäßen Lösung ist die Exzentrizität nur durch den geringen Weg bestimmt, der erforderlich ist, die reibschlüssige Verbindung herzustellen. Daher ist die Verformung des flexiblen Eingriffsteils im Betrieb deutlich geringer, was die Verluste verringert und die Standzeit erhöht.

Grundsätzlich ist es möglich, dass die erste und die zweite Eingriffsfläche an einer, an zwei oder an drei oder mehr Stellen in Eingriff stehen. Als besonders günstig hat es sich jedoch herausgestellt, wenn zwei gegenüberliegende Eingriffspunkte vorgesehen sind. Bei einer solchen Lösung ist der Innenring des Wälzlagers im Querschnitt im wesentlichen elliptisch ausgebildet.

Eine sichere Kraftübertragung kann insbesondere dadurch erreicht werden, wenn die erste Eingriffsfläche kegelförmig mit kleinem Öffnungswinkel ausgebildet ist. Auf diese Weise kann auch ein allfälliger Verschleiß ausgeglichen werden. Besonders günstig ist es in diesem Zusammenhang, wenn der Öffnungswinkel zwischen 1° und 10°, vorzugsweise zwischen 2° und 6° beträgt. Der Wave Generator wird in diesem Fall vorzugsweise so ausgeführt, dass der Außenring des Wälzlagers kegelförmig mit kleinem Öffnungswinkel ausgebildet ist. Dabei sollte der Öffnungswinkel des Außenrings im wesentlichen dem der ersten Eingriffsfläche entsprechen.

Besonders vorteilhaft ist es, wenn ein Anpressmittel vorgesehen ist, das die erste Eingriffsfläche in Axialrichtung auf die zweite Eingriffsfläche drückt. Dadurch kann eine selbständige Einstellung der Anpresskraft und damit des übertragbaren Moments erreicht werden. Vorzugsweise weist das Anpressmittel eine Feder auf, die den ersten Eingriffsteil und den flexiblen Eingriffsteil in Axialrichtung gegeneinander vorspannt.

Eine konstruktiv besonders günstige Lösung wird dadurch erreicht, dass die Halteelemente als Bolzen ausgebildet sind, die durch kreisbogenförmige Langlöcher im Antriebsrad hindurchgeführt sind. Eine besonders günstige seitliche Führung des Antriebsrades wird erreicht, wenn das Antriebsrad an einer Seite an einer Schulter der Nockenwelle anliegt, und an der anderen Seite an Schultern von Hülsen anliegt, die von den Bolzen an die Nockenwelle gepresst werden.

Eine besonders gute Ausnützung des Bauraumes bei möglichst großem Drehmoment des Elektromotors wird erzielt, wenn der Durchmesser des Scheibenläufers zwischen 60 und 90% des Außendurchmessers des Antriebsrades beträgt.

In einer besonders bevorzugten Ausführungsvariante der Erfindung ist vorgesehen, dass zwischen Nockenwelle und Antriebsrad ein Drehbegrenzungsmittel vorgesehen ist, das aus einem Rastelement besteht, das in einer Nut beschränkt beweglich aufgenommen ist. Dadurch wird die Verdrehung der Nockenwelle auf zulässige Werte begrenzt. Weiters wird durch diese Maßnahme gewährleistet, dass bei Ausfall der Verstelleinrichtung oder beim Kaltstart eine definierte Stellung der Nockenwelle gewährleistet ist. An sich ist zwar das Harmonic-Drive-Getriebes aufgrund des großen Untersetzungsverhältnisses selbsthemmend, aber durch die unvermeidlichen Drehschwingungen im System wird bei stromlosem Elektromotor praktisch sofort eine Stellung der Nockenwelle erreicht, die der spätestmöglichen Ventilöffnungszeit entspricht. Es ist daher möglich, die Motorelektronik so abzustimmen, dass unter diesen Voraussetzungen ein akzeptabler Notlaufbetrieb möglich ist.

In der Folge wird die vorliegende Erfindung anhand des in den Figuren dargestellten Ausführungsbeispiels näher erläutert.

Fig. 1                      zeigt einen Schnitt durch eine erfindungsgemäße Vorrichtung,

Fig. 2                      eine Explosionsdarstellung eines allgemeinen Harmonic-Drive-Getriebes,

Fig. 3A, B, C und D         Darstellungen zur Erklärung der Wirkungsweise eines Harmonic-Drive-Getriebes;

Fig. 4, 5, 6 und 6A         Details einer weiteren Ausführungsvariante der Erfindung.

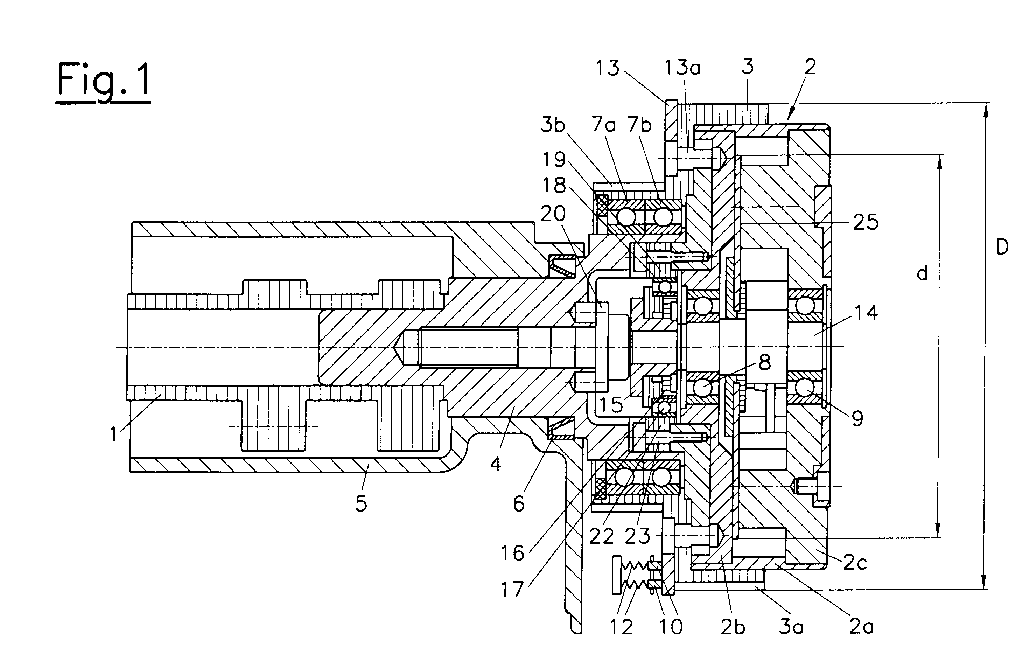

In der Fig. 1 ist eine erfindungsgemäße Vorrichtung zur Verstellung einer Nockenwelle 1 über einen Elektromotor 2 dargestellt. Der Antrieb der Nockenwelle 1 erfolgt über ein Antriebsrad 3, das als Zahnriemenscheibe ausgebildet ist. Ein Ende der Nockenwelle 1 ist mit einem Antriebsteil 4 fest verbunden, der gegenüber dem Gehäuse 5 mit einem Simmerring 6 abgedichtet ist.

Das Antriebsrad 3 ist mit zwei Wälzlagern 7a, 7b, die als Kugellager ausgebildet sind, auf dem Antriebsteil 4 gelagert. Der Elektromotor 2 besteht aus einem im wesentlichen zylindrischen Gehäuse 2a, das fest mit dem Antriebsrad 3 verbunden ist. Das Gehäuse 2a ist an seinen Stirnseiten durch Gehäusehälften 2b und 2c abgeschlossen. In den Gehäusehälften 2b und 2c sind die Wicklungen des Elektromotors 2 angeordnet. Weiters ist in den Gehäusehälften 2b, 2c über Wälzlager 8, 9 eine Welle 14 angeordnet, die über eine Hülse 15 fest mit dem elliptisch ausgebildeten Innenring 16 eines Wälzlagers 17 verbunden ist. Dieser Teil eines Harmonic-Drive-Getriebes wird in der Literatur zumeist als Wave-Generator bezeichnet. Der Außenring 18 des Wälzlagers 17 ist mit einem flexiblen, außen verzahnten Zahnrad 19 verbunden, das in seiner Gesamtheit topfförmig ausgebildet ist, und über eine Verschraubung 20 mit dem Halteteil 4 und somit mit der Nockenwelle 1 verbunden ist. Die äußere Verzahnung des Zahnrades 19 steht mit einem starren, innen verzahnten Zahnrad 22 an zwei Stellen in Eingriff, nämlich den Scheitelpunkten, der durch den Wave-Generator gebildeten Ellipse. Das außen verzahnte Zahnrad 22 ist über Schrauben 23 fest mit dem Antriebsrad 3 verbunden.

An einer Stirnseite des Antriebsrades 3 ist eine scheibenförmige Halterung 13 über Schrauben 13a fest verbunden. An der Halterung 13 sind Schleifringe 10 angebracht, die mit feststehenden Schleifkontakten 12 in Verbindung stehen, die als Kohlebürsten ausgebildet sind.

Das Antriebsrad 3 besitzt zwei Laufflächen 3a und 3b mit unterschiedlichem Durchmesser. Die Lauffläche 3a mit größerem Durchmesser ist zur Aufnahme eines nicht dargestellten Zahnriemens ausgebildet, um das Antriebsrad 3a über die ebenfalls nicht dargestellte Kurbelwelle der Brennkraftmaschine anzutreiben. Die Lauffläche 3b besitzt einen geringeren Durchmesser und ist dazu vorgesehen, einen ebenfalls nicht dargestellten Zahnriemen aufzunehmen, der eine weitere Nockenwelle antreibt. Die Schleifkontakte 12 sitzen in dem Freiraum innerhalb dieses nicht dargestellten Zahnriemens.

Zwischen den Gehäusehälften 2b und 2c des Elektromotors 2 ist ein Scheibenläufer 25 angeordnet. Der Außendurchmesser d des Scheibenläufers 25 entspricht etwa 80% des Außendurchmessers D des Antriebsrades 3. Er ist dabei vollständig innerhalb des Antriebsrades 3 angeordnet, und insgesamt ist mehr als die Hälfte des Elektromotors 2 räumlich innerhalb des Antriebsrades 3 angeordnet.

In der Folge wird der Betrieb der erfindungsgemäßen Vorrichtung näher erklärt werden. Bei nicht angetriebenem Elektromotor 2 findet keine Verstellung der Nockenwelle 1 gegenüber dem Antriebsrad 3 statt. Wenn jedoch die Welle 14 des Elektromotors 2 um eine Umdrehung gedreht wird, so kommen durch die Drehung des Wave-Generators nacheinander all Zähne des flexiblen Zahnrades 18 mit dem innen verzahnten Zahnrad 22 in Eingriff. Wenn das außenverzahnte Zahnrad 18 beispielsweise achtundvierzig Zähne aufweist, während das innenverzahnte Zahnrad 22 fünfzig Zähne aufweist, so findet eine Relativbewegung dieser beiden Zahnräder im Ausmaß von zwei Zähnen, d. h. einer fünfundzwanzigstel Umdrehung statt. Dies entspricht auch dem Verdrehwinkel, um den sich die Nockenwelle 1 gegenüber dem Antriebsrad 3 verdreht. Durch das große Untersetzungsverhältnis ist das Moment, das vom Elektromotor 2 aufzubringen ist, relativ gering. Die Lagerung des Antriebsrades 3 ist beim erfindungsgemäßen Aufbau sehr einfach und da die Verbindung direkt über die Wälzlager 7a, 7b erfolgt, ist das auftretende Spiel im Harmonic-Drive-Getriebe gering. Die Schrauben 23 sind in entsprechenden kreisringsektorförmigen Ausnehmungen 26 des Halteteils 4 als Drehbegrenzungsmittel angeordnet. Auf diese Weise ist gleichzeitig der zulässige Verstellwinkel der Nockenwelle begrenzt, um eine unzulässige Verstellbewegung zu verhindern.

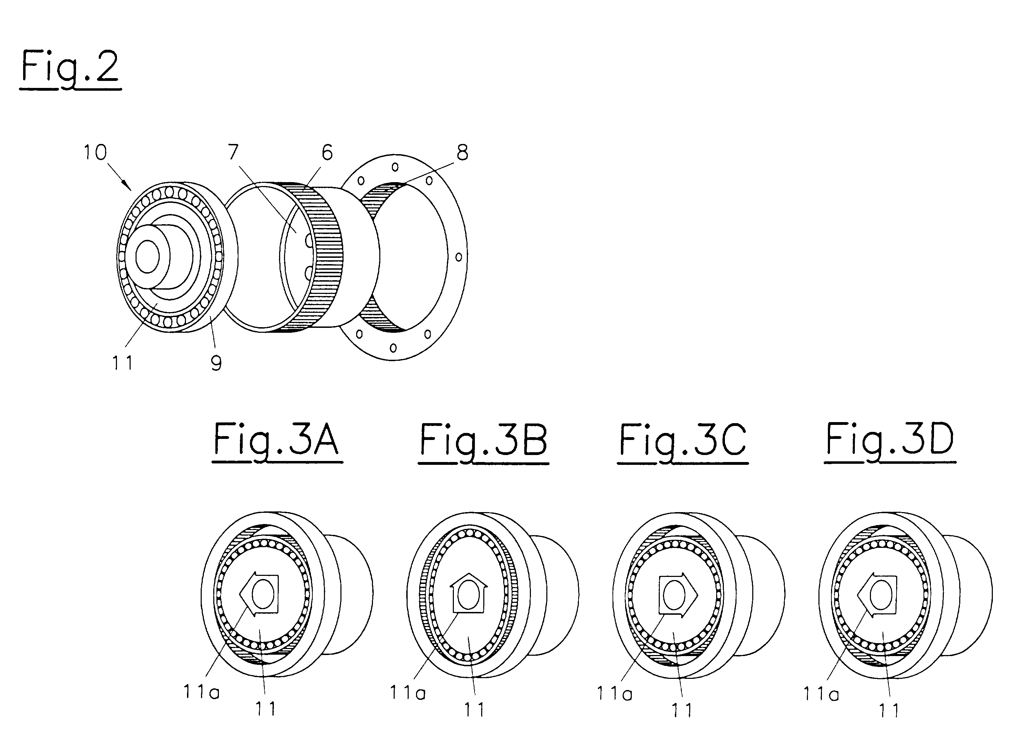

In der Fig. 2 ist in einer axonometrischen Explosionsdarstellung das Harmonic-Drive-Getriebe detailliert dargestellt. Der Innenring 11 des Wälzlagers 10 ist elliptisch mit geringfügiger Exzentrizität. Der Außenring 9 stützt sich direkt an der Innenseite eines flexiblen Zahnrades 6 ab. Dieses Zahnrad 6 steht an zwei gegenüberliegenden Punkten mit einem starren, innenverzahnten Zahnrad 8 in Eingriff, das kreisförmig ausgebildet ist.

In den Fig. 3A, B, C und D ist die Funktionsweise dieses Harmonic-Drive-Getriebes dargestellt. Der Innenring 11 ist in der Stellung der Fig. 3B gegenüber der Stellung in der Fig. 3A um 90° in Richtung des Uhrzeigersinns verdreht. Die Fig. 3C zeigt eine weitere Drehung um 90° und die Fig. 3D eine Drehung um insgesamt 360°. Zur Erleichterung der Übersicht ist in den Fig. 3A, B, C und D eine pfeilförmige Markierung 11a angebracht. Die Zähnezahl des flexiblen Zahnrades 6 ist um zwei geringer, als die Zähnezahl des innenverzahnten Zahnrades 8. Daher ergibt sich ein geringfügiger Unterschied der Winkelgeschwindigkeit des Zahnrades 6 gegenüber dem Zahnrad 8. Aus den Fig. ist ersichtlich, dass sich die Markierung 6a, die gedanklich mit dem Zahnrad 6 verbunden ist, im Zuge der Drehbewegung des Innenrings 11 langsam in Gegenuhrzeigerrichtung bewegt. Insgesamt entspricht der Verdrehwinkel dem Zentriwinkel von zwei Zähnen des Zahnrads 6.

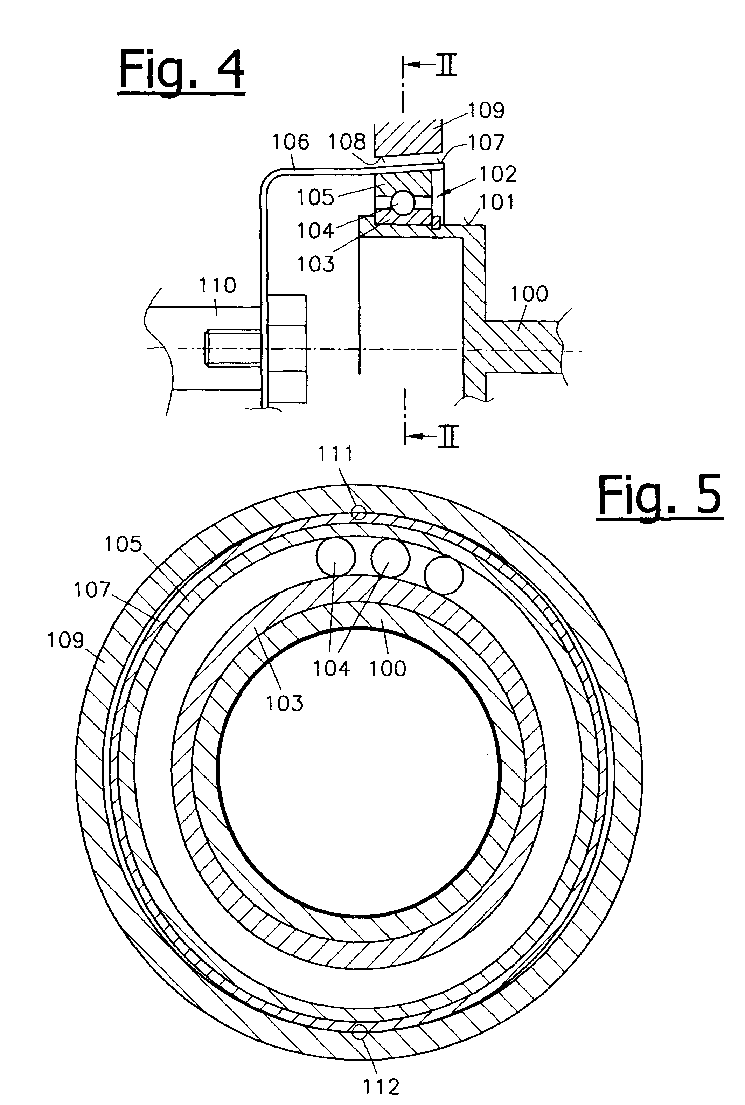

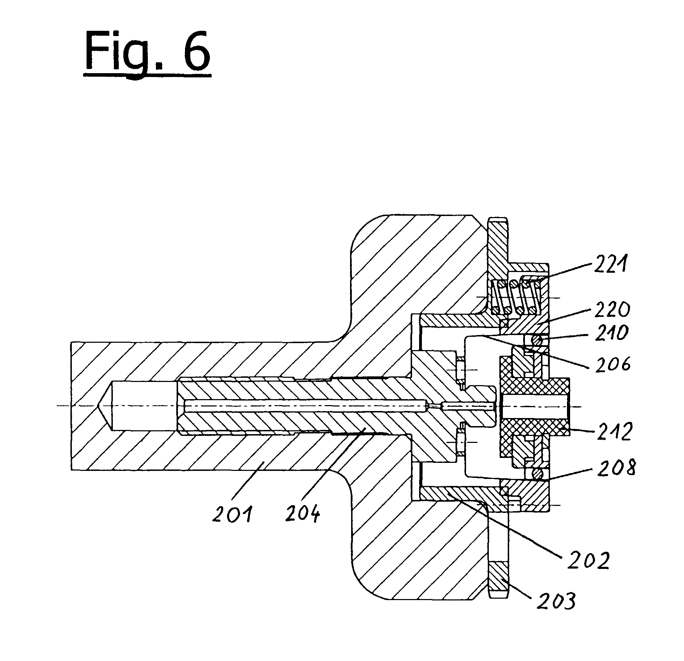

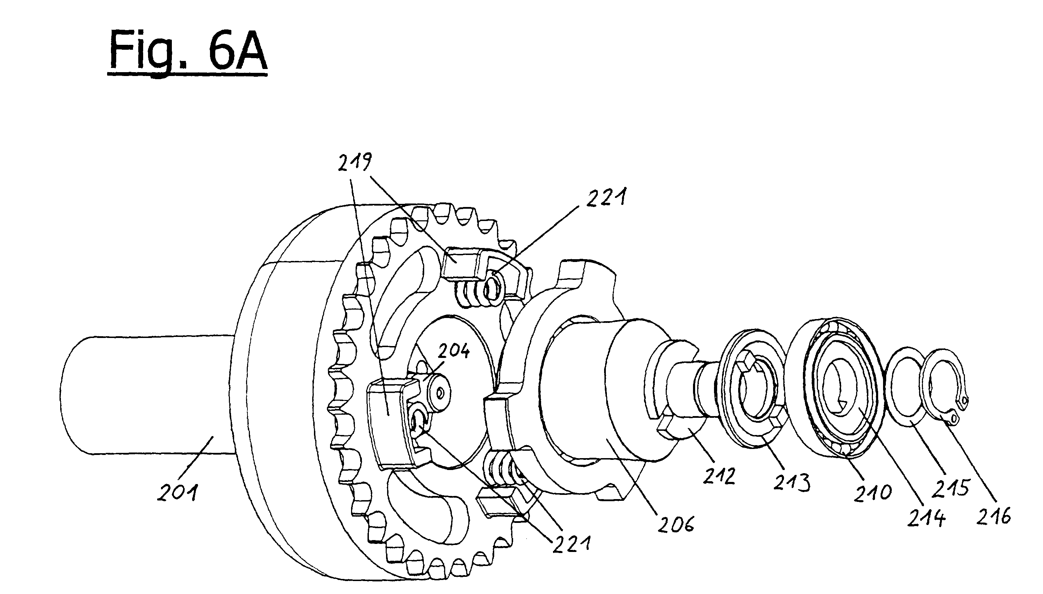

In den Fig. 4 bis 6 und 6A sind alternative Ausführungsvarianten eines Harmonic-Drive Getriebes dargestellt, die bei einer Ausführung der Erfindung nach Fig.1 verwendet werden können.

Das Getriebe der Fig. 4 besteht aus einer Antriebswelle 100, die an ihrem Ende eine Sitzfläche 101 aufweist, auf der ein Wälzlager 102 aufgekeilt ist, das als Kugellager ausgebildet ist. Das Wälzlager 102 besitzt einen Innenring 103, dessen äußerer Umfang elliptisch ausgebildet ist. Durch die Wälzkörper 104 wird der flexible Außenring 105 in eine elliptische Form gebracht. Da der äußere Umfang des Außenrings 105 leicht abgeschrägt ist, nimmt er insgesamt die Form eines elliptischen Kegels an. Am Außenring 105 liegt ein flexibler Eingriffsteil 106 an. Am äußeren Umfang des Eingriffsteils 106 ist die zweite Eingriffsfläche 107 angeordnet, die mit einer ersten Eingriffsfläche 108 in Eingriff steht, die am inneren Umfang eines ersten Eingriffsteils 109 angeordnet ist. Die erste Eingriffsfläche 109 ist kreiskegelförmig ausgebildet. Mit dem Eingriffsteil 106 steht eine Abtriebswelle 110 in Verbindung. Anstelle eines elliptischen Innenrings 103 kann auch ein dünnwandiger Innenring mit gleichmäßiger Dicke verwendet werden, der auf einer elliptischen Sitzfläche befestigt ist, so dass sich durch elastische Verformung eine elliptische Umfangsfläche ergibt.

In der Folge wird die Wirkungsweise der erfindungsgemäßen Vorrichtung näher erklärt. In der in der Fig. 5 dargestellten Lage berühren sich die Eingriffsflächen 107 und 108 in den einander gegenüberliegenden Bereichen 111 und 112. Bei einer Umdrehung der Antriebswelle 100 wandern diese Bereiche 111 und 112 entlang der ersten Eingriffsfläche 108 bis in ihre ursprüngliche Lage. Die zweite Eingriffsfläche 107 rollt dabei auf der ersten Eingriffsfläche 108 ab. Da jedoch der Umfang $U_1$ der ersten Eingriffsfläche 108 geringfügig größer ist als der Umfang $U_2$ der zweiten Eingriffsfläche 107, dreht sich der Eingriffsteil 106 geringfügig entgegen der Drehrichtung der Antriebswelle 100. Das Übersetzungsverhältnis i, definiert durch die Drehzahl der Antriebswelle gebrochen durch die Drehzahl der Abtriebswelle, entspricht dem Kehrwert der Exzentrizität $\varepsilon$, wenn diese nach folgender Gleichung definiert ist:

$$\varepsilon = (U_1 - U_2)/U_1$$

Je nach der Auswahl der verwendeten Materialien können Werte von i = $1/\varepsilon$ in einem Bereich von 100 bis 300 und darüber hinaus erzielt werden. Generell kann das Übersetzungsverhältnis um so größer werden, je härter die Materialien sind, die für die Eingriffsflächen 107 und 108 verwendet werden.

Die Fig. 6 zeigt ein erfindungsgemäßes Getriebe, das Teil einer Verstelleinrichtung für die Nockenwelle einer nicht näher dargestellten Brennkraftmaschine ist. An der Nockenwelle 201 ist mit einer Schraube 204 ein als dünnwandiger Zylinder ausgebildetes Reibrad 206 befestigt, das den flexiblen Eingriffsteil bildet. Relativ zur Nockenwelle 201 verdrehbar ist eine Hülse 202, an der ein Kettenrad 203 einstückig angeformt ist. Ein Wälzlager 210 ist elliptisch ausgebildet, so dass das Reibrad 206 mit einem Eingriffsbereich der Hülse 202 nur an zwei in Umfangsrichtung gegenüberliegenden Stellen in Eingriff steht. Der Umfang des Reibrades 206 ist geringfügig kleiner als der der Eingriffsfläche 208, die auf einem in Bezug auf die Hülse 202 in Axialrichtung verschiebbaren Ring 220 angeordnet ist und ein Hohlrad bildet. Der Innenring des Wälzlagers 210 ist fest im einem Antriebselement 212 verbunden, das mit einem nicht dargestellten Verstellmotor in Verbindung steht. Um den erforderlichen Anpressdruck des Reibrades 206 auf dem Ring 220 dauernd zu gewährleisten, ist eine Feder 221 vorgesehen, die den Ring 220 gegenüber der Hülse 202 vorspannt.

In der Fig. 6A zeigt eine Explosionsdarstellung den Aufbau des obigen Getriebes. Der Ring 220 ist in Führungen 219 auf dem Kettenrad 203 axial verschiebbar, jedoch verdrehfest gelagert. Das Antriebselement 212 ist über einen Ring 213 mit einem Träger 214 für den Innenring des Wälzlagers 210 verbunden. Die Verbindung ist durch eine Scheibe 215 und einen Seegerring 216 gesichert.

**Patentansprüche**

1. Vorrichtung zur Verstellung einer Nockenwelle (1) einer Brennkraftmaschine mit innerer Verbrennung, mit einem Antriebsrad (3) zum Antrieb der Nockenwelle (1), das koaxial zur Nockenwelle (1) angeordnet ist, sowie mit einem Elektromotor (2), der mit der Nockenwelle (1) über ein Harmonic-Drive Getriebe in Verbindung steht, das aus einem Wälzlager (17) mit einem elliptischen Innenring (16), einem auf diesem Wälzlager (17) angeordneten flexiblen außenverzahnten Zahnrad (19) und einem starren innenverzahnten Zahnrad (22), das mit dem außenverzahnten Zahnrad (19) in Eingriff steht, zusammengesetzt ist, **dadurch gekennzeichnet,** dass der Elektromotor (2) ein Gehäuse (2a) aufweist, das fest mit dem Antriebsrad (3) verbunden ist, und das zumindest teilweise in diesem angeordnet ist, und dass der Elektromotor (2) einen Rotor aufweist, der als Scheibenläufer (25) ausgebildet ist, der in einem Spalt zwischen zwei Gehäusehälften (2b, 2c) des Elektromotors (2) angeordnet ist.

2. Vorrichtung nach Anspruch 1, **dadurch gekennzeichnet,** dass der Scheibenläufer innerhalb des Antriebsrades (3) angeordnet ist.

3. Vorrichtung nah einem der Ansprüche 1 bis 2, dadurch gekennzeichnet, dass das Antriebsrad (3) als Zahnriemenrad ausgebildet ist, das auf der Nockenwelle (1) über Wälzlager (17) gelagert ist.

4. Vorrichtung nach Anspruch 3, **dadurch gekennzeichnet,** dass das Zahnriemenrad zwei Laufflächen (3a, 3b) mit unterschiedlichen Außendurchmessern aufweist, wovon eine Lauffläche (3a) zur Aufnahme eines Zahnriemens ausgebildet ist, der von einer Kurbelwelle der Brennkraftmaschine angetrieben ist und die andere Lauffläche (3b) zur Aufnahme eines Zahnriemens ausgebildet ist, der zum Antrieb einer weiteren Nockenwelle vorgesehen ist.

5. Vorrichtung nach einem der Ansprüche 3 oder 4, **dadurch gekennzeichnet,** dass Schleifringe (10) zur Versorgung des Elektromotors (2) auf einer Stirnfläche des Antriebsrades (3) ausgebildet sind.

6. Vorrichtung nach einem der Ansprüche 1 bis 5, **dadurch gekennzeichnet,** dass der Elektromotor (2) eine Welle (14) aufweist, die direkt mit dem elliptischen Innenring (16) des Wälzlagers (17) verbunden ist.

7. Vorrichtung nach einem der Ansprüche 1 bis 6, **dadurch gekennzeichnet,** dass das flexible Zahnrad (19) des Harmonic-Drive-Getriebes direkt mit der Nockenwelle (1) verbunden ist.

8. Vorrichtung nach einem der Ansprüche 1 bis 7, **dadurch gekennzeichnet,** dass das innenverzahnte Zahnrad (22) des Harmonic-Drive-Getriebes mit dem Antriebsrad (3) verbunden ist.

9. Vorrichtung zur Verstellung einer Nockenwelle (1) einer Brennkraftmaschine mit innerer Verbrennung, mit einem Antriebsrad (3) zum Antrieb der Nockenwelle (1), das koaxial zur Nockenwelle (1) angeordnet ist, sowie mit einem Elektromotor (2), der mit der Nockenwelle (1) über ein Harmonic-Drive Getriebe in Verbindung steht, **dadurch gekennzeichnet**, dass der Elektromotor (2) ein Gehäuse (2a) aufweist, das fest mit dem Antriebsrad (3) verbunden ist, und das zumindest teilweise in diesem angeordnet ist, und dass der Elektromotor (2) einen Rotor aufweist, der als Scheibenläufer (25) ausgebildet ist, der in einem Spalt zwischen zwei Gehäusehälften (2b, 2c) des Elektromotors (2) angeordnet ist und dass das Getriebe aus folgenden Bauteilen besteht: einer ersten Eingriffsfläche (108, 208), die am inneren Umfang eines ersten Eingriffsteils (109) angeordnet ist, einer zweiten Eingriffsfläche (107), die am äußeren Umfang eines flexiblen Eingriffsteils (106, 206) angeordnet ist und mit der ersten Eingriffsfläche (108, 208) in Eingriff steht, und einem zum ersten Eingriffsteil (109) und zum flexiblen Eingriffsteil (106, 206) koaxialen Treibteil, an dem ein Wälzlager (102, 210) mit einem unrund ausgebildeten Innenring (103) angeordnet ist, das einen flexiblen Außenring (105) aufweist, der mit dem flexiblen Eingriffsteil (106, 206) verbunden ist und diesen an vorzugsweise zwei Stellen gegen den ersten Eingriffsteil (109) drückt, wobei die erste Eingriffsfläche (108, 208, 308) des ersten Eingriffsteils (109) mit der zweiten Eingriffsfläche (107) des flexiblen Eingriffsteils (106, 206) in einer reibschlüssigen Verbindung steht.

10. Vorrichtung nach Anspruch 9, **dadurch gekennzeichnet,** dass der Innenring (103) des Wälzlagers (102, 210) im Querschnitt elliptisch ausgebildet ist.

11. Vorrichtung nach einem der Ansprüche 9 oder 10, **dadurch gekennzeichnet,** dass ein vorzugsweise als Feder (221) ausgebildetes Anpressmittel vorgesehen ist, das die erste Eingriffsfläche (208) in Axialrichtung auf die zweite Eingriffsfläche drückt.

12. Vorrichtung nach einem der Ansprüche 1 bis 11, **dadurch gekennzeichnet,** dass der Durchmesser des Scheibenläufers zwischen 60 und 90% des Außendurchmessers des Antriebsrades beträgt.

13. Vorrichtung nach einem der Ansprüche 1 bis 12, **dadurch gekennzeichnet,** dass zwischen Nockenwelle (1) und Antriebsrad ein Drehbegrenzungsmittel vorgesehen ist, das aus einem Rastelement (23) besteht, das in einer Ausnehmung (26) beschränkt beweglich aufgenommen ist.

14. Vorrichtung nach einem der Ansprüche 1 bis 13, **dadurch gekennzeichnet,** dass der Elektromotor (2) über konzentrisch angeordnete Schleifringe (10) mit Strom versorgt wird.

Fig.1

Fig.2

Fig.3A  Fig.3B  Fig.3C  Fig.3D

# Fig. 4

# Fig. 5

# Fig. 6

# Fig. 6A

EP 1 039 101 A2